# EUROPÄISCHE PATENTSCHRIFT

(11) **EP 1 933 265 B1**
(45) Veröffentlichungstag und Bekanntmachung des Hinweises auf die Patenterteilung: **05.04.2017**
(21) Anmeldenummer: 07123011.4
(22) Anmeldetag: 12.12.2007
(51) Int. Cl.: G06Q 10/00

(54) **VERFAHREN IN EINEM KOMMUNIKATIONSNETZ ZUR LADUNG EINER TEILNEHMERGRUPPE ZU EINEM EREIGNIS**
METHOD IN A COMMUNICATION NETWORK FOR INVITING A GROUP OF SUBSCRIBERS TO AN EVENT
PROCÉDÉ DANS UN RÉSEAU DE COMMUNICATION DESTINÉ AU CHARGEMENT D'UN GROUPE D'ABONNÉS EN VUE D'UN ÉVÈNEMENT

(30) Priorität: 13.12.2006 DE 102006059283
(43) Veröffentlichungstag der Anmeldung: 18.06.2008
(73) Patentinhaber: Vodafone Holding GmbH, 40213 Düsseldorf (DE)
(72) Erfinder: Aprath, Stefan, 42699, Solingen (DE)
(74) Vertreter: Vogel, Andreas

(56) Entgegenhaltungen:
- EP-A- 0 921 670
- US-A1- 2002 076 015
- US-A1- 2003 018 816
- US-B1- 6 798 753

## Beschreibung

Die Erfindung betrifft ein Verfahren in einem Kommunikationsnetz zur Ladung einer Teilnehmergruppe zu einem Ereignis, wobei die Teilnehmergruppe sich aus einer Mehrzahl von Teilnehmern zusammensetzt, das Kommunikationsnetz eine Mitteilung über das Ereignis empfängt und ein elektronischer Dienst in dem Kommunikationsnetz aus der Mitteilung eine Nachricht generiert und die Nachricht an die Teilnehmer der Teilnehmergruppe weitergeleitet wird.

Aus der DE 103 21 000 A1 ist ein Verfahren zur Verteilung von Nachrichten an mehrere Teilnehmer bekannt. Das beschriebene Verfahren soll dazu dienen, mehreren Teilnehmern eine inhaltlich gleiche Nachricht zukommen zu lassen, was sich beispielhaft für ein Sportteam anbietet, das Informationen über geänderte Trainingstermine bzw. geplante Spiele austauschen will.

Dazu findet ein zentraler Dienst Verwendung, der auf einem Server implementiert sein kann. Diesen zentralen Dienst kontaktiert einer der Teilnehmer, um seine Nachricht zu übermitteln. Anschließend versendet der zentrale Dienst automatisch die Nachricht an alle Teilnehmer. Als Besonderheit gilt dabei, dass in dem beschriebenen Verfahren die Übermittlung durch unterschiedliche Kommunikationsarten wie etwa Fax, E-Mail oder Telefonanruf ermöglicht wird. Der Vorteil des beschriebenen Verfahrens besteht also darin, dass alle Teilnehmer durch eine einzelne Aktion eines Nachrichtenverteilers einfach und sicher über verschiedene Kommunikationsarten informiert werden können.

In der US 2002/0076015 A1 wird eine Vorrichtung eines Kommunikationssystems offenbart, das die von Teilnehmern eingegebenen Ereignisse und Mitteilungen erkennt. Dafür ist unter anderem ein Kalendermodul vorhanden, auf welches die Teilnehmer Zugriff haben.

Aus der US 6,798,753 B1 ist eine Vorrichtung und ein Verfahren bekannt, das der automatischen Terminplanung und der Einrichtung einer Telefonkonferenz über ein Netzwerk dient.

Die US 2003/0018816 A1 zeigt eine Vorrichtung und ein Verfahren zum Anstoßen von Kalenderereignissen von einem Hostsystem zu einem mobilen Datenkommunikationssystem.

In der EP 0921670 A2 ist eine Vorrichtung und ein Verfahren zum Fernzugriff auf einen elektronischen Kalender und in einem Telefonnetzwerk beschrieben.

Als nachteilig hat es sich herausgestellt, dass eine Verabredung einer Teilnehmergruppe für ein terminiertes Ereignis, insbesondere eine Rückmeldung bzgl. eines benannten Termins, sehr aufwendig ist. So bedarf es mehrerer Kommunikationsschritte zwischen den einzelnen Teilnehmern, bis die Gruppe geklärt hat, ob der entsprechende Termin zweckdienlich ist.

Aufgabe der Erfindung ist es, ein Verfahren zur Ladung einer Teilnehmergruppe zu einem Ereignis zu schaffen, das die oben genannten Nachteile vermeidet, insbesondere, dass ein Verfahren mit wenigen Verfahrensschritten bereitgestellt wird, welches zusätzlich eine einfache und sichere Kommunikation zwischen den Teilnehmern einer Teilnehmergruppe betreffend eines etwaigen Ereignisses ermöglicht.

Zur Lösung dieser Aufgabe wird ein Verfahren in einem Kommunikationsnetz zur Ladung einer Teilnehmergruppe zu einem Ereignis mit den Merkmalen des Anspruches 1 vorgeschlagen. In den abhängigen Ansprüchen sind bevorzugte Weiterentwicklungen aufgeführt.

Es ist erfindungsgemäß vorgesehen, dass in dem elektronischen Dienst mindestens eine Ereignis-Bedingung hinsichtlich eines Stattfindens des Ereignisses hinterlegt ist, das Kommunikationsnetz von den Teilnehmern der Teilnehmergruppe wenigstens eine Antwort empfängt und die Antwort eine absagende Angabe oder eine zusagende Angabe enthält, der elektronische Dienst die Angaben prüft, ob mindestens eine Ereignis-Bedingung erfüllt ist, für den Fall, dass mindestens eine Ereignis-Bedingung erfüllt ist eine Benachrichtigung an zumindest eine Anzahl der Teilnehmer der Teilnehmergruppe gesandt wird, und die Benachrichtigung eine absagende Aussage oder eine zusagende Aussage hinsichtlich des Stattfindens des Ereignisses beinhalten.

Der Kern des erfindungsgemäßen Verfahrens liegt darin, dass die Antworten der Teilnehmer auf die Nachricht in dem elektronischen Dienst ausgewertet werden. Letzterer überprüft dabei autonom, ob die Ereignis-Bedingung erfüllt ist. Je nach Ausgang dieser Prüfung benachrichtigt der elektronische Dienst die Teilnehmergruppe selbstständig und übermittelt den Teilnehmern das Resultat der Prüfung. Somit bedarf es nach einer Übersendung einer Mitteilung und einem Auslösen des erfindungsgemäßen Verfahrens keiner externen Kontrolle und/oder Entscheidung mehr, da diese im elektronischen Dienst geschieht.

Unter dem Begriff Kommunikationsnetz ist insbesondere ein Telekommunikationsnetz zu verstehen, das für die Abwicklung von Telefongesprächen ausgelegt ist. Ebenfalls kann es sich bei dem Kommunikationsnetz um ein Mobilfunknetz handeln. Die damit ausführbare Kommunikation reicht vom Privatbereich mit der schnurlosen Telefonie (CT und DECT) und Bluetooth, über alle Mobilfunknetze für die Sprachkommunikation (GSM, UMTS, 4G) bis hin zur Satellitenkommunikation.

Bei dem Ereignis, zu dem das in Rede stehende Verfahren laden soll, kann es sich um jedwede Art von Veranstaltung handeln zu der eine Mehrzahl von Personen zusammen findet. Als Beispiel seien hier insbesondere Konzerte, Messen, Seminare oder Ausstellungen jeglicher Art genannt. Des Weiteren kann es sich bei dem Ereignis auch um eine Sportveranstaltung handeln, wobei das erfindungsgemäße Verfahren eine Benachrichtigung der Mitglieder des Sportvereines ermöglicht und eine Auswertung der Zusagen bzw. Absagen durchführt. Voraussetzung für eine solche Auswertung ist die Ereignis-Bedingung, unter der die Bedingung für ein Stattfinden oder ein Nichtstattfinden eines Ereignisses zu verstehen ist.

Bei dem elektronischen Dienst handelt es sich um ein System, welches in das Kommunikationsnetz integriert ist und die einlaufenden Mitteilungen bzw. Antworten empfängt und auswertet. Um dieses zu ermöglichen kann der elektronische Dienst aus einer Software bestehen, die auf einer separaten Hardware im Kommunikationsnetz betrieben wird. Denkbar ist es auch, dass der elektronische Dienst dezentral aufgebaut ist, was sich insbesondere dann anbietet, wenn das Kommunikationsnetz ein Mobilfunknetz ist und örtlich begrenzte Teilnehmergruppen das erfindungsgemäße Verfahren nutzen. In diesem Fall könnte der elektronische Dienst in einer Feststationsteuerung (Base Station Controller, DSC) oder in einer Sende/Empfangsstation (Base Transivers Station, BTS) integriert sein. In Mobilfunknetzen kann für die Übermittlung der Nachricht, Benachrichtigung und/oder Mitteilung eine SMS (Short Message Service), eine MMS (Multimedia Messaging Service), eine EMS (Enhanced Message Service), eine UM (Unified Messaging) und/oder eine LBS (Location Based Services) verwendet werden. Weiterhin kann jede der aufgezählten Telekommunikationsdienste dazu benutzt werden, die Ereignis-Bedingung im elektronischen Dienst zu hinterlegen. Dieses kann mittels der Mitteilung geschehen oder auch mit einer separaten Ereignismitteilung. Daneben ist es auch denkbar, dass die Ereignis-Bedingung über ein Webinterface des Betreibers des Kommunikationsnetzes an den elektronischen Dienst übermittelt wird.

Eine vorteilhafte Ausführungsvariante des erfindungsgemäßen Verfahrens zeichnet sich dadurch aus, dass ein Initiator die Mitteilung an das Kommunikationsnetz sendet. So kann es sich beispielsweise bei dem Initiator um den Anbieter eines Ereignisses, wie etwa den Betreiber eines Kinos oder einer Messe handeln, der eine vordefinierte Teilnehmergruppe einladen möchte. Insbesondere kann es sich bei dem Initiator auch um einen Teilnehmer der Teilnehmergruppe handeln, wie etwa bei einer Sportmannschaft. In diesem Fall sendet einer der Sportler eine Mitteilung an den elektronischen Dienst mit den Daten für ein Training oder ein Turnier.

Der elektronische Dienst generiert aus dieser Mitteilung eine Nachricht und versendet diese wiederum an die restlichen Teilnehmer der Sportmannschaft. Im Anschluss daran erhält jeder Teilnehmer der Sportmannschaft die Möglichkeit mittels einer Antwort darzulegen, ob er an dem Training bzw. Turnier teilnehmen oder nicht teilnehmen will. Ist die Ereignis-Bedingung, wie etwa die nötige Anzahl von Sportlern erfüllt, sendet der elektronische Dienst automatische eine Benachrichtigung an sämtliche Teilnehmer der Sportmannschaft, dass das Training bzw. das Turnier stattfinden kann.

Als vorteilhaft hat es sich für das erfindungsgemäße Verfahren herausgestellt, wenn wenigstens eine Ereignis-Bedingung auf der Anzahl der Antworten und/oder der Anzahl der Teilnehmer und/oder der Anzahl der Angaben basiert. Solche anzahlbasierten Ereignis-Bedingungen sind einfach aufzusetzen und immer dann vorteilhaft, wenn eine Mindestanzahl von Teilnehmern Voraussetzung für das Stattfinden eines Ereignisses ist. Weiterhin besteht die Möglichkeit, empfängerbasierte Ereignis-Bedingungen zu definieren. Voraussetzung dafür ist, dass für die, insbesondere für jeden, Teilnehmer der Teilnehmergruppe mindestens eine Information im elektronischen Dienst hinterlegt ist und die Ereignis-Bedingung auf den Informationen der Teilnehmer basiert. Vorteilhafterweise kann die Ereignis-Bedingung auf einer Anzahl und/oder einer Art der Informationen fußen. Die Informationen können einerseits von den Teilnehmern selbst oder andererseits von dem Initiator im elektronischen Dienst hinterlegt werden. Im ersteren Fall kann es sich um persönliche Angaben oder Vorlieben handeln. Im zweiten Fall können sich die Informationen auf eine Funktion oder eine Bedeutung des Teilnehmers für das Ereignis beziehen. Da bei der Kommunikation in Kommunikationsnetzen eine Identifizierung der einzelnen Teilnehmer stattfindet, kann der elektronische Dienst die hinterlegten Informationen bei der Auswertung leicht zuordnen und berücksichtigen.

Gemäß einer weiteren Variante des erfindungsgemäßen Verfahrens bearbeitet der elektronische Dienst die Mitteilung. Bei dieser Bearbeitung kann es sich insbesondere um ein Dekodieren, Formatieren und/oder Ergänzen handeln, um aus der Mitteilung die Nachricht zu erstellen. In einer vorteilhaften Ausführungsvariante wirkt die Mitteilung als eine Auslösemitteilung, die eine Weiterleitung einer Standardnachricht initiiert, wobei die Standardnachricht eine Ladung zu dem Ereignis aufweist. Die Auslösemitteilung enthält im Gegensatz zur Mitteilung nur einen sehr eingeschränkten Informationsinhalt, wie etwa eine Uhrzeit. Die Einladung zu dem Ereignis ist in der Standardnachricht schon vordefiniert und wird durch die Auslösemitteilung nicht weiter oder nur sehr eingeschränkt verändert. Solcherart Standardnachrichten bieten sich insbesondere dann an, wenn es sich um ein regelmäßig wiederkehrendes Ereignis, wie etwa eine Sportveranstaltung handelt. Alternativ dazu kann die Auslösemitteilung in dem elektronischen Dienst ein Mitteilungssystem starten, welches selbstständig eine regelmäßige Weiterleitung einer Standardnachricht initiiert. Das Mitteilungssystem bedarf somit nur einer einzelnen Auslösemitteilung, um im Anschluss autonom zu arbeiten und die Nachricht an die Teilnehmer der Teilnehmergruppe zu versenden. Dieses bietet sich insbesondere dann an, wenn das Ereignis über einen längeren Zeitraum ohne Änderungen im regelmäßigen Ablauf stattfindet. Durch die erfindungsgemäße Prüfung der Antworten der Teilnehmer und der anschließenden Übersendung einer Benachrichtigung bedarf es keines weiteren Einsatzes eines Initiators oder eines Teilnehmers, um über das Stattfinden bzw. Nichtstattfinden des Ereignisses zu entscheiden.

In einer weiteren vorteilhaften Ausführungsform des beschriebenen Verfahrens ist wenigstens eine Präferenz in dem elektronischen Dienst hinterlegt, wobei die Präferenz eine unvollständige Mitteilung bei der Generierung der Nachricht ergänzt. Die Präferenz ist eine Einstellungsmöglichkeit für einen Teil der Mitteilung, welche im Vorhinein belegt wird. Ist die Mitteilung unvollständig, werden die Lücken durch die Präferenzwerte ersetzt. Damit es zu keinen Überschneidungen zwischen der Mitteilung und den Präferenzen kommt, hat der Inhalt der Mitteilung eine höhere Priorität als jener der Präferenzen. Somit ist sichergestellt, dass nur in dem Fall wo Lücken vorhanden sind die Werte der Präferenz verwendet werden.

Ereignisse, für die das erfindungsgemäße Verfahren in Frage kommt, sind häufig terminiert. Folglich bedarf es einer Entscheidung bis zu einem gewissen Zeitpunkt, ob das Ereignis stattfinden soll oder nicht. Um diese terminierte Entscheidung sicherzustellen kann in einer weiteren vorteilhaften Ausgestaltung des erfindungsgemäßen Verfahrens der elektronische Dienst beim Erhalt einer Antwort und/oder nach Ablauf einer Zeitspanne und/oder nach Ablauf eines Zeitpunktes und/oder in etwa zeitgleichen Abständen prüfen, ob mindestens eine Ereignis-Bedingung erfüllt ist. Dabei liegen die zeitgleichen Abstände zwischen 1 Sekunde und 120 Minuten, bevorzugt zwischen 1 Minute und 60 Minuten, besonders bevorzugt zwischen 5 Minuten und 30 Minuten. Diese Zeitintervalle decken erfahrungsgemäß jene Zeitabschnitte ab, in welchen nach Zugang der Nachricht die meisten Teilnehmer geantwortet haben.

Sollte keine der im elektronischen Dienst hinterlegten Ereignis-Bedingungen erfüllt sein, so kann es dennoch zu einem Zeitpunkt geboten sein, eine Benachrichtigung mit einer absagenden Aussage oder einer zusagenden Aussage an die Teilnehmer der Teilnehmergruppe zu übersenden. In einer weiteren vorteilhaften Ausführungsvariante des erfindungsgemäßen Verfahrens ist deshalb vorgesehen, dass falls nach Erhalt der Antwort und/oder nach Ablauf der Zeitspanne und/oder nach Ablauf des Zeitpunktes und/oder nach Ablauf mindestens eines der etwa zeitgleichen Abstände keine der Ereignis-Bedingungen erfüllt ist, der elektronische Dienst die Benachrichtigung übermittelt. Der Inhalt der so entstandenen Benachrichtigung kann von dem Initiator im Vorhinein festgelegt werden.

Zusätzlich besteht gemäß einer weiteren vorteilhaften Ausgestaltung die Möglichkeit, dass die Übersendung der Benachrichtigung mit der absagenden Aussage oder der zusagenden Aussage jederzeit von dem Initiator auslösbar ist. Somit ist sichergestellt, dass äußeren Veränderungen Rechnung getragen werden kann und der Initiator mittels einer Botschaft an den elektronischen Dienst jederzeit eine Entscheidung herbeiführen kann. Zusätzlich kann der Initiator die Aussage der vom elektronischen Dienst generierten Benachrichtigung abändern. Im Gegensatz zum oben gesagten, findet in diesem Fall eine Änderung bzw. eine Beeinflussung des elektronischen Dienstes nach der Entscheidung statt. Diese Entscheidung kann einerseits durch Zeitablauf und/oder durch Erfüllung bzw. Nichterfüllung mindestens einer der Ereignis-Bedingungen getroffen worden sein. Erfindungsgemäß kann im Anschluss daran für ein gewisses Zeitfenster die Möglichkeit bestehen, dass der Initiator und/oder ein Teilnehmer die Entscheidung des elektronischen Dienstes abändert und somit eine Benachrichtigung versandt wird, deren Aussage nicht mit der ursprünglich vom elektronischen Dienst generierten übereinstimmt.

Um zu überprüfen, ob es einer beeinflussenden Botschaft bedarf, kann im Rahmen einer weiteren vorteilhaften Ausführungsvariante des erfindungsgemäßen Verfahrens der Initiator eine Statusanfrage an das Kommunikationsnetz senden. Durch die Statusanfrage wird eine Statusantwort ausgelöst und dem Initiator übermittelt, wobei die Statusantwort die Anzahl der Angaben und/oder die Informationen derjenigen Teilnehmer beinhaltet, die eine Antwort übersandt haben. Mittels der Statusanfrage bzw. der Statusantwort ist es dem Initiator also jederzeit möglich, einen Einblick in die bisher eingegangenen und/oder noch fehlenden Antworten der Teilnehmer zu erhalten. Im Rahmen der Statusantwort kann dem Initiator unter anderem die Anzahl der Zusagen, die Anzahl der Absagen, die Informationen bzgl. der zusagenden Teilnehmer, die Informationen bezüglich der absagenden Teilnehmer, ein Zeitpunkt an dem eine letzte zusagende und/oder absagende Angabe von dem elektronischen Dienst akzeptiert wird bevor die Auswertung beginnt, eine Ereignis-Bedingung und/oder einen Status der Prüfung der Ereignis-Bedingung abrufen. Je nach Ereignis kann es vorteilhaft sein, wenn einzelne oder mehrere der aufgezählten Erklärungen dem Initiator bzw. einem Teilnehmer übermittelt werden.

Gemäß einer weiteren Ausführungsform des erfindungsgemäßen Verfahrens wird die Mitteilung von einer Kommunikationseinheit des Initiators abgesandt, wobei insbesondere die Nachricht und/oder die Benachrichtigung an die Kommunikationseinheit jedes Teilnehmers der Teilnehmergruppe übermittelt werden. Als Kommunikationseinheit wird hierbei ein System bezeichnet, das Signale, insbesondere Daten oder Informationen verarbeiten und in wenigstens eine Richtung übermitteln kann. Es kann sich dabei insbesondere um ein Mobiltelefon, also ein tragbares, batteriebetriebenes Funktelefon handeln oder auch um eine Datenkarte, die in einen Computer integriert werden kann. Kommunikation im Sinne der Erfindung ist insbesondere eine Daten- oder Informationsübertragung. Diese kann auf eine Richtung beschränkt sein oder zwischen zwei Komponenten bidirektional erfolgen.

Weiterhin können die Datensätze betreffend die Teilnehmergruppe, die Teilnehmer, die Ereignis-Bedingungen, die Informationen, die Präferenzen und/oder die Standardnachricht vom Initiator bzw. einem oder mehreren der Teilnehmer im elektronischen Dienst hinterlegt werden, wobei insbesondere die Hinterlegung auf einer Internetseite des Betreibers des Kommunikationsnetzes stattfindet.

Weitere Maßnahmen, Vorteile, Merkmale und Effekte der Erfindung ergeben sich aus den Unteransprüchen, der nachfolgenden Beschreibung sowie den Zeichnungen. In den Zeichnungen ist die Erfindung in mehreren Ausführungsbeispielen schematisch dargestellt. Es zeigen:
- Fig.1: eine Übersendung einer Mitteilung durch einen Initiator an den elektronischen Dienst und eine Weiterleitung einer Nachricht an die Teilnehmer einer Teilnehmergruppe,
- Fig.2: ein Übermitteln von Antworten an den elektronischen Dienst,
- Fig.3: eine Benachrichtigungen der Teilnehmer der Teilnehmergruppe,
- Fig.4: eine Übersendung einer Mitteilung an den elektronischen Dienst in einer zweiten Ausführungsvariante,
- Fig.5: ein Übermitteln einiger Antworten an den elektronischen Dienst,
- Fig.6: ein Auslösen einer Entscheidung durch den Initiator und
- Fig.7: ein Kommunikationsnetz sowie eine Anzahl von Kommunikationseinheiten.

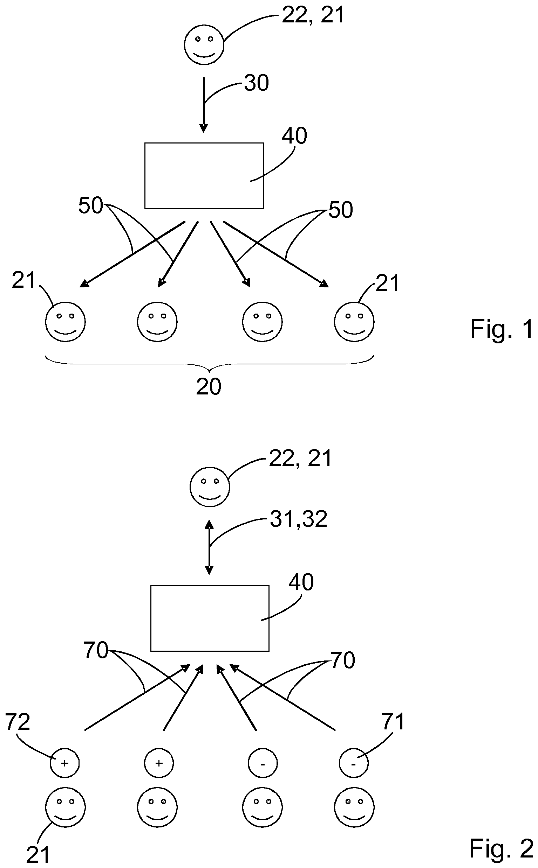

In Figur 1 ist eine Teilnehmergruppe 20 gezeigt, welche sich aus einer Mehrzahl von Teilnehmern 21 zusammensetzt. Einer der Teilnehmer 21 fungiert gleichzeitig als ein Initiator 22. Der Initiator 22 übersendet eine Mitteilung 30 an einen elektronischen Dienst 40. Der elektronische Dienst 40 ist in ein Kommunikationsnetz 10 integriert und kann aus einer Rechnereinheit bestehen, auf der ein entsprechendes Computerprogramm läuft, welches das Verfahren beinhaltet. Aus der Mitteilung 30 generiert der elektronische Dienst 40 eine Nachricht 50. Dazu kann die Mitteilung 30 von dem elektronischen Dienst 40 dekodiert, formatiert sowie anderweitig bearbeitet werden. Insbesondere ist ein Überleiten der Mitteilung 30 aus einer Kommunikationsnorm, wie etwa SMS, in eine andere Kommunikationsnorm, wie etwa E-Mail, denkbar. Die so überarbeitete Nachricht 50 wird im Anschluss an die Teilnehmer 21 der Teilnehmergruppe 20 weitergeleitet.

Durch die Nachricht 50 werden die Teilnehmer 21 der Teilnehmergruppe 20 über das nahende Ereignis informiert. Jeder der Teilnehmer 21 kann nach Erhalt der Nachricht 50 für sich entscheiden, ob er dem Ereignis beiwohnen möchte oder nicht. Entsprechend ist es den Teilnehmern 21 möglich eine Antwort 70 an den elektronischen Dienst 40 zu übersenden und eine absagende Angabe 71 oder eine zusagende Angabe 72 beizufügen. Die Ausgestaltung der absagenden 71 bzw. der zusagenden Angabe 72 hängt selbstverständlich jeweils von der Fragestellung bezüglich des Ereignisses ab.

In Figur 2 ist dargestellt, dass alle Teilnehmer 21 der Teilnehmergruppe 20 eine Antwort 70 mit einer absagenden 71 oder zusagenden Angabe 72 an den elektronischen Dienst 40 übermitteln. Nach Erhalt dieser Antworten 70 prüft der elektronische Dienst 40 diese darauf, ob mindestens eine Ereignis-Bedingung erfüllt ist. Je nach Art des Ereignisses kann eine Vielzahl von Ereignis-Bedingungen in dem elektronischen Dienst 40 hinterlegt sein und separat geprüft werden. Denkbar sind Ereignis-Bedingungen, welche auf anzahlbasierten oder auf empfängerbasierten Regeln aufbauen. So kann beispielsweise eine Ereignis-Bedingung auf der Anzahl der Antworten 70, der Anzahl der Teilnehmer 21 und/oder der Anzahl der Angaben 71,72 basieren. Gleichfalls kann der Initiator 22 im Rahmen der Einrichtung der Teilnehmergruppe 20 im elektronischen Dienst 40 auch eine oder mehrere Informationen 23 für jeden der Teilnehmer 21 hinterlegen. Vorzugsweise weisen die Informationen 23 auf die Bedeutung des Teilnehmers 21 für das Ereignis hin. Daneben ist es auch möglich, dass jeder der Teilnehmer 21 persönliche Informationen 23, welche Vorlieben und/oder Abneigungen für das Ereignis widerspiegeln, im elektronischen Dienst 40 hinterlegt. Die Berücksichtigung der Informationen 23 bei der Prüfung der Ereignis-Bedingungen wird dadurch vereinfacht, dass die Antworten 70 der Teilnehmer 21 eine Authentifizierungsinformation beinhalten. Solche Art Authentifizierungsinformationen sind insbesondere in Mobilfunknetzen weit verbreitet und dienen zum Zweck, Systemfunktionen des Kommunikationsnetzes vor Missbrauch zu schützen. Um dieses zu ermöglichen, kann jede Antwort 70 eine charakteristische Adressierung enthalten, wobei insbesondere die charakteristische Adressierung eine Telefonnummer (MSISDN), eine internationale Mobilfunkteilnehmerkennung (IMSI) und/oder eine fortlaufende herstellerabhängige Fertigungsnummer (IMEI) ist. Mittels zumindest einer dieser Nummern ist es dem Kommunikationsnetz 10 bzw. dem elektronischen Dienst 40 möglich dem Benutzer eindeutig zu identifizieren und die Informationen 23 zuzuordnen.

Um den Initiator 22 vor einer Prüfung bzw. Entscheidung des elektronischen Dienstes 40 über den Zustand bzw. die Anzahl der bis dahin eingegangenen Antworten 70 zu informieren, weist das erfindungsgemäße Verfahren die Möglichkeit auf, eine Statusanfrage 31 an den elektronischen Dienst 40 zu senden. Dabei löst die Statusanfrage 31 eine Statusantwort 32 aus, die es dem Initiator 22 ermöglicht, sich ein Bild über das bisherige Antwortverhalten der Teilnehmer 21 zu verschaffen. So kann beispielsweise die Statusantwort 32 die Anzahl der Angaben 71,72 aufweisen und/oder die Informationen 23 derjenigen Teilnehmer 21 beinhalten, die eine Antwort 70 übersandt haben.

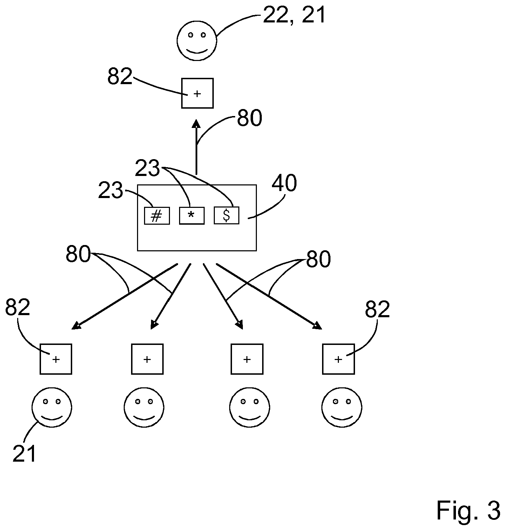

Nach der Prüfung, ob mindestens eine oder mehrere der Ereignis-Bedingungen erfüllt sind, übersendet der elektronische Dienst 40 eine Benachrichtigung 80 an die Teilnehmer 21 der Teilnehmergruppe 20. Das Ausführungsbeispiel in Figur 3 verdeutlicht die Übersendung der Benachrichtigung 80, welche eine zusagende Aussage 82 hinsichtlich des Stattfindens des Ereignisses beinhaltet. Der Vorteil des erfindungsgemäßen Verfahrens liegt darin, dass es für die Entscheidungsfindung nicht des Eingriffes des Initiators 22 bedarf. Vielmehr reicht die Übersendung der Antworten 70 mit den absagenden 71 oder zusagenden Angaben 72 durch die Teilnehmer 21 der Teilnehmergruppe 20. Die anschließende Prüfung wird autonom und unter Berücksichtigung der zuvor übermittelten Ereignis-Bedingungen durchgeführt. Zusätzlich können diese Ereignis-Bedingungen noch durch weitere vom elektronischen Dienst 40 empfangene Mitteilung 30 verändert werden, womit eine dynamische Anpassung an die jeweilige Ereignissituation möglich ist.

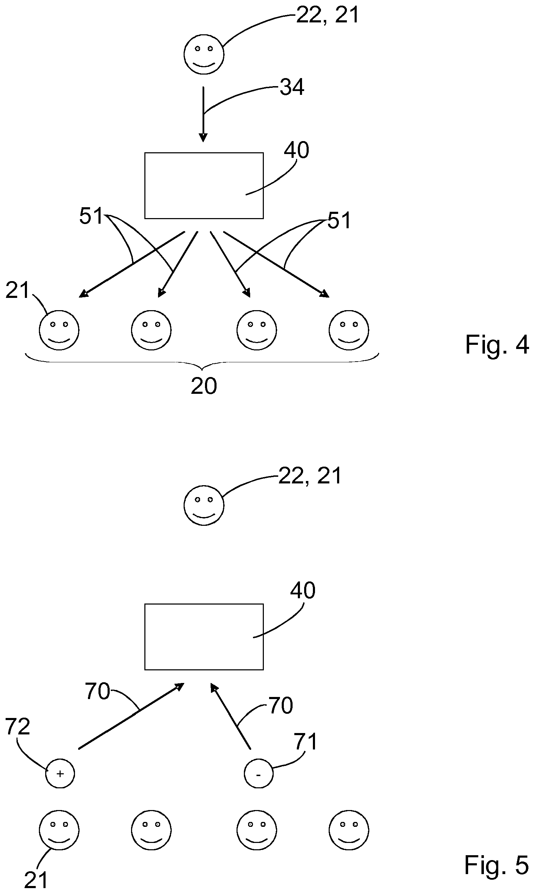

In der Figur 4 ist ein erster Schritt einer zweiten Ausführungsvariante des erfindungsgemäßen Verfahrens dargestellt. Dabei übersendet der Initiator 22 eine Auslösemitteilung 34 an den elektronischen Dienst 40. Bei der Auslösemitteilung 34 handelt es sich um eine besondere Art der Mitteilung 30, die nicht von dem elektronischen Dienst 40 formatiert wird, sondern nur das Weiterleiten einer Standardnachricht 51 bewirkt. Der Inhalt dieser Standardnachricht 51 ist dabei weitestgehend unabhängig von dem Inhalt der Auslösemitteilung 34. Deshalb bietet sich die Verwendung einer Auslösemitteilung 34 bzw. einer Standardnachricht 51 dann an, wenn auf ein regelmäßig wiederkehrendes Ereignis hingewiesen werden soll. Wie die Figur 4 verdeutlicht, übermittelt der elektronische Dienst 40 jedem Teilnehmer 21 eine Standardnachricht 51 zur Kenntnisnahme.

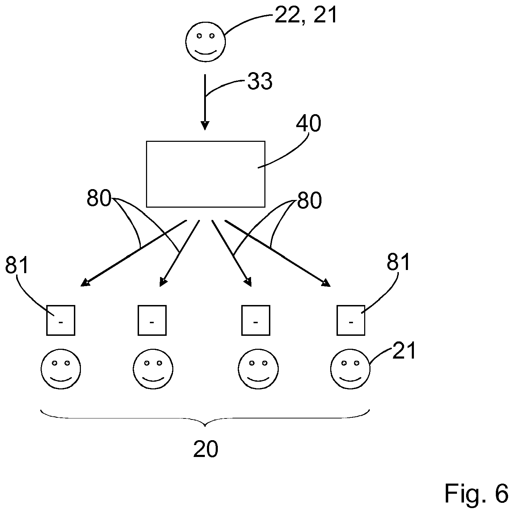

Im Anschluss an die Kenntnisnahme der Standardnachricht 51 steht es jedem Teilnehmer 21 der Teilnehmergruppe 20 offen, eine Antwort 70 an den elektronischen Dienst 40 zu übermitteln. In Figur 5 ist verdeutlicht, dass nur einige der Teilnehmer 21 dieser Möglichkeit folgen. Dabei beinhaltet die übersendete Antwort 70 eines ersten Teilnehmers 21 eine zusagende Angabe 72 und die eines zweiten Teilnehmers 21 eine absagende Angabe 71. Handelt es sich um ein terminiertes Ereignis, muss der elektronische Dienst 40 nach Ablauf einer Zeitspanne oder eines Zeitpunktes prüfen, ob die Ereignis-Bedingungen erfüllt sind. Erfindungsgemäß ist es vorgesehen, dass falls nach Ablauf der Zeitspanne und/oder des Zeitpunktes keine der Ereignis-Bedingung erfüllt ist, der elektronische Dienst 40 die Benachrichtigung 80 übersendet. Allerdings bietet das Verfahren auch die Möglichkeit, dass der Initiator 22 jederzeit, also auch vor Ablauf der Zeitspanne und/oder des Zeitpunktes eine Übersendung der Benachrichtigung 80 auslöst, was Figur 6 verdeutlicht. Dazu kann der Initiator 22 eine Kurzmitteilung 33 an den elektronischen Dienst 40 senden, in welcher die Art der Aussage 81,82 hinterlegt ist. Aus dieser Kurzmitteilung 33 generiert der elektronische Dienst 40 eine Benachrichtigung 80, welche im dargestellten Fall eine absagende Aussage 81 enthält und übermittelt diese Benachrichtigung 80 an alle Teilnehmer 21 der Teilnehmergruppe 20.

Abweichend von dem dargestellten Ausführungsbeispiel ist es auch möglich, dass der Initiator 22 eine Kurzmitteilung 33 an den elektronischen Dienst 40 übersendet, in der neben der gewählten Aussage 81,82 eine Teilnehmeruntergruppe aufgeführt ist. In diesem Fall kann die Aussage 81,82 der Benachrichtigung 80, welche die Teilnehmeruntergruppe 20 erreicht von jener abweichen, die an die restlichen Teilnehmer 21 der Teilnehmergruppe 20 übersandt wird. Der Initiator 22 führt folglich eine Auswahl innerhalb der Teilnehmergruppe 20 aus. Dadurch besteht die Möglichkeit, dass nur bestimmte Teilnehmer 21 eine zusagende Aussage 82 für das Stattfinden eines Ereignisses erhalten, während der Rest der Teilnehmergruppe 20 eine absagende Aussage 81 erhält. Dieses ist insbesondere dann von Bedeutung, wenn die positive Resonanz auf eine Nachricht 50 größer ist als von dem Initiator 22 erwartet. In diesem Fall ermöglicht es das beschriebene Verfahren eine Auswahl der Teilnehmer 21 aus der Teilnehmergruppe 20 zu vollführen.

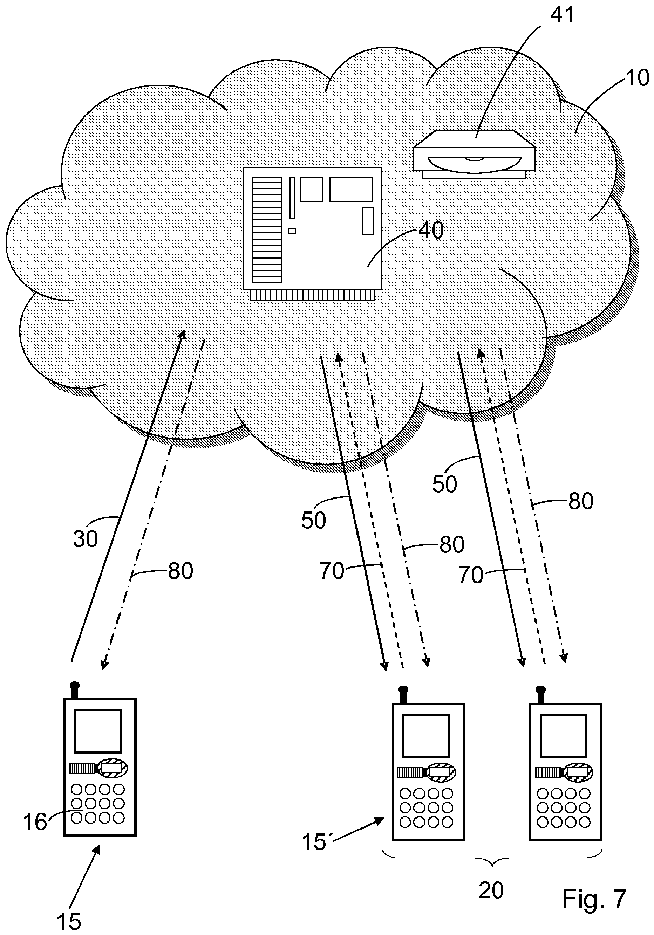

Das erfindungsgemäße Verfahren ist für ein Kommunikationsnetz 10 vorgesehen, wobei es sich bei dem Kommunikationsnetz 10 vorteilhafterweise um ein Mobilfunknetz handelt. Dieses verdeutlicht Figur 7, welche das Kommunikationsnetz 10 sowie eine Anzahl von Kommunikationseinheiten 15,15' darstellt. Bei den Kommunikationseinheiten 15,15' handelt es sich um Mobiltelefone über welche die Mitteilung 30, die Antworten 70 sowie die Benachrichtigungen 80 versandt bzw. empfangen werden. Zur Eingabe der Mitteilung 30 in die Kommunikationseinheit 15,15' kann letztere über ein Eingabemittel 16, wie etwa eine Tastatur, verfügen. Nach Abschluss der Eingabe ist es dem Initiator 22 möglich, die Mitteilung 30 über eine Kommunikationsverbindung an das Kommunikationsnetz 10 bzw. den elektronischen Dienst 40 zu übersenden. In dem dargestellten Ausführungsbeispiel handelt es sich bei dem elektronischen Dienst 40 um eine Rechnereinheit, welche in das Kommunikationsnetz 10 integriert ist und auf der eine das Verfahren abbildende Computersoftware läuft. Um die Informationen 23 der Teilnehmer 21 zu speichern, weist der elektronische Dienst 40 einen Datenspeicher 41 auf. Nach Empfang der Mitteilung 30 übersendet das Kommunikationsnetz 10 eine Nachricht 50 an die Kommunikationseinheiten 15' der Teilnehmer 21 der Teilnehmergruppe 20. Diese Übersendung kann insbesondere in Form einer SMS oder MMS geschehen. Im Anschluss an den Erhalt der Nachricht 50 können die Teilnehmer 21 entscheiden, ob diese dem Ereignis beiwohnen wollen oder nicht und eine entsprechende Antwort 70 an den elektronischen Dienst 40 zurücksenden. Die Generierung der Antwort 70 kann mittels einer Software geschehen, welche auf den Kommunikationseinheiten 15,15' gespeichert ist. Dabei können die Kommunikationseinheiten 15,15' eine Menüsteuerung aufweisen, an der eine entsprechende Antwort 70 mit einer absagenden 71 oder zusagenden Angabe 72 auswählbar ist. Weiterhin kann die Übermittlung der Antwort 70 auch mittels eines USSD Dienstes (Unstructured Supplementary Service Daten) erfolgen. Dabei handelt es sich um einen Übermittlungsdienst für GMS-Netze, der eine einfache Nutzung von Mobilfunkzusatzdiensten ermöglicht und ein teilweise vordefiniertes Format aufweist.

Wie beschrieben wertet der elektronische Dienst 40 die Antworten 70 aus und prüft ob eine Ereignis-Bedingung erfüllt ist. Im Anschluss daran übersendet der elektronische Dienst 40 eine Benachrichtigung 80 an zumindest eine Anzahl der Kommunikationseinheiten 15,15' der Teilnehmergruppe 20. Je nach Aussage 81,82 der Benachrichtigung werden damit die Teilnehmer 21 informiert, ob das Ereignis stattfindet oder nicht.

### Bezugszeichenliste

- 10: Kommunikationsnetz
- 15,15': Kommunikationseinheit
- 16: Eingabemittel

- 20: Teilnehmergruppe
- 21: Teilnehmer
- 22: Initiator
- 23: Information

- 30: Mitteilung
- 31: Statusanfrage
- 32: Statusantwort
- 33: Kurzmitteilung
- 34: Auslösemitteilung

- 40: elektronischer Dienst
- 41: Datenspeicher

- 50: Nachricht
- 51: Standardnachricht

- 70: Antwort
- 71: absagende Angabe
- 72: zusagende Angabe

- 80: Benachrichtigung
- 81: absagende Aussage in der Benachrichtigung 80
- 82: zusagende Aussage in der Benachrichtigung 80

## Patentansprüche

1. Verfahren in einem Kommunikationsnetz (10) zur Ladung einer Teilnehmergruppe (20) zu einem Ereignis, wobei
die Teilnehmergruppe (20) sich aus einer Mehrzahl von Teilnehmern (21) zusammensetzt,
das Kommunikationsnetz (10) eine Mitteilung (30) über das Ereignis empfängt,
ein elektronischer Dienst (40) in dem Kommunikationsnetz (10) aus der Mitteilung (30) eine Nachricht (50) generiert und die Nachricht (50) an die Teilnehmer (21) der Teilnehmergruppe (20) weitergeleitet wird,
in dem elektronischen Dienst (40) mindestens eine Ereignis-Bedingung hinsichtlich eines Stattfindens des Ereignisses hinterlegt ist,
das Kommunikationsnetz (10) von den Teilnehmern (21) der Teilnehmergruppe (20) wenigstens eine Antwort (70) empfängt und die Antwort (70) eine absagende Angabe (71) oder eine zusagende Angabe (72) enthält,
der elektronische Dienst (40) die Angaben (71,72) prüft, ob mindestens eine Ereignis-Bedingung erfüllt ist,
für den Fall, dass mindestens eine Ereignis-Bedingung erfüllt ist eine Benachrichtigung (80) an zumindest eine Anzahl der Teilnehmer (21) der Teilnehmergruppe (20) gesandt wird, und
die Benachrichtigung (80) eine absagende Aussage (81) oder eine zusagende Aussage (82) hinsichtlich des Stattfindens des Ereignisses beinhalten,
**dadurch gekennzeichnet,**
**dass** der elektronische Dienst (40) die Mitteilung (30) bearbeitet, wobei es sich bei der Mitteilung (30) um eine Auslösemitteilung (34) handelt, die eine Weiterleitung einer Standardnachricht (51) als Nachricht (50) initiiert, wobei die Standardnachricht (51) eine Ladung zu dem Ereignis aufweist, die in der Standardnachricht (51) schon vordefiniert ist,
und **dass** wenigstens eine Präferenz in dem elektronischen Dienst (40) hinterlegt ist, wobei die Präferenz eine unvollständige Mitteilung (30) bei der Generierung der Nachricht (50) ergänzt.

2. Verfahren nach Anspruch 1,
**dadurch gekennzeichnet,**
**dass** ein Initiator (22) die Mitteilung (30) an das Kommunikationsnetz (10) sendet, wobei insbesondere der Initiator (22) ein Teilnehmer (21) der Teilnehmergruppe (20) ist.

3. Verfahren nach Anspruch 1 oder 2,
**dadurch gekennzeichnet,**
**dass** wenigstens eine Ereignis-Bedingung auf der Anzahl der Antworten (70) und/oder der Anzahl der Teilnehmer (21) und/oder der Anzahl der Angaben (71,72) basiert.

4. Verfahren nach einem der vorhergehenden Ansprüche,
**dadurch gekennzeichnet,**
**dass** für die, insbesondere für jeden, Teilnehmer (21) der Teilnehmergruppe (20) mindestens eine Information (23) im elektronischen Dienst (40) hinterlegt ist.

5. Verfahren nach Anspruch 4,
**dadurch gekennzeichnet,**
**dass** wenigstens eine Ereignis-Bedingung auf den Informationen (23) der Teilnehmer (21) basiert, wobei insbesondere die Ereignis-Bedingung auf einer Anzahl und/oder einer Art der Information (23) basiert.

6. Verfahren nach einem der vorhergehenden Ansprüche,
**dadurch gekennzeichnet,**
**dass** der elektronische Dienst (40) bei jedem Erhalt einer Antwort (70) und/oder nach Ablauf einer Zeitspanne und/oder nach Ablauf eines Zeitpunktes und/oder in etwa zeitgleichen Abständen prüft, ob mindestens eine Ereignis-Bedingung erfüllt ist.

7. Verfahren nach Anspruch 6,
**dadurch gekennzeichnet,**
**dass** falls nach Erhalt der Antwort (70) und/oder nach Ablauf der Zeitspanne und/oder nach Ablauf des Zeitpunktes und/oder nach Ablauf mindestens eines der etwa zeitgleichen Abstände keine der Ereignis-Bedingung erfüllt ist, der elektronische Dienst (40) die Benachrichtigung (80) übermittelt.

8. Verfahren nach einem der vorhergehenden Ansprüche,
**dadurch gekennzeichnet,**
**dass** die Übersendung der Benachrichtigung (80) mit der absagenden Aussage (81) oder der zusagenden Aussage (82) jederzeit von dem Initiator (22) auslösbar ist, wobei insbesondere die Aussage (81,82) der vom elektronischen Dienst generierten Benachrichtigung (80) durch den Initiator (22) abänderbar ist.

9. Verfahren nach einem der vorhergehenden Ansprüche,
**dadurch gekennzeichnet,**
**dass** die Mitteilung (30) von einer Kommunikationseinheit (15) des Initiators (22) ausgesandt wird, wobei insbesondere die Nachricht (50) und/oder die Benachrichtigung (80) an eine Kommunikationseinheit (15,15') jedes Teilnehmers (21) der Teilnehmergruppe (20) übermittelt werden.

10. Verfahren nach einem der vorhergehenden Ansprüche,
**dadurch gekennzeichnet,**
**dass** von dem Initiator (22) eine Statusanfrage (31) an das Kommunikationsnetz (10) gesendet wird, wobei durch die Statusanfrage (31) eine Statusantwort (32) ausgelöst und an den Initiator (22) übermittelt wird, wobei insbesondere die Statusantwort (32) die Anzahl der Angaben (71,72) und/oder die Informationen (23) der antwortenden Teilnehmer (21) aufweist.

## Claims

1. A method in a communications network (10) for inviting a group of subscribers (20) to an event, wherein
the group of subscribers (20) is composed of a multiplicity of subscribers (21),
the communications network (10) receives an announcement (30) concerning the event,
an electronic service (40) in the communications network (10) generates a message (50) from the announcement (30), and the message (50) is forwarded to the subscribers (21) in the group of subscribers (20),
in the electronic service (40), at least one event condition is stored with regard to an occurrence of the event,
the communications network (10) receives at least one reply (70) from the subscribers (21) in the group of subscribers (20), and the reply (70) contains a negative statement (71), or a positive statement (72),
the electronic service (40) checks the statements (71, 72) as to whether at least one event condition is fulfilled,
for the case in which at least one event condition is fulfilled a notification (80) is sent to at least a number of the subscribers (21) in the group of subscribers (20), and
the notification (80) contains a negative statement (81), or a positive statement (82) with regard to the occurrence of the event,
**characterised in that**,
the electronic service (40) processes the announcement (30), wherein
the announcement (30) takes form of a release announcement (34), which initiate the forwarding of a standard message (51), as a message (50), wherein
the standard message (51) has an invitation to the event, which is already predefined in the standard message (51),
and **in that** at least one preference is stored in the electronic service (40), wherein
the preference supplements an incomplete announcement (30) in the generation of the message (50).

2. The method in accordance with claim 1,
**characterised in that**,
an initiator (22) sends the announcement (30) to the communications network (10), wherein
in particular the initiator (22) is a subscriber (21) in the group of subscribers (20).

3. The method in accordance with claim 1 or 2,
**characterised in that**,
at least one event condition is based on the number of replies (70) and/or the number of subscribers (21) and/or the number of statements (71, 72).

4. The method in accordance with one of the preceding claims,
**characterised in that**,
for the subscribers, in particular for each subscriber (21) in the group of subscribers (20), at least one item of information (23) is stored in the electronic service (40).

5. The method in accordance with claim 4,
**characterised in that**,
at least one event condition is based on the information items (23) of the subscribers (21), wherein
in particular the event condition is based on a number and/or type of the information items (23).

6. The method in accordance with one of the preceding claims,
**characterised in that**,
the electronic service (40) with each receipt of a reply (70), and/or after expiry of a period of time, and/or after passing a point in time, and/or at approximately equal time intervals, checks whether at least one event condition is fulfilled.

7. The method in accordance with claim 6,
**characterised in that**,
if after receipt of the reply (70), and/or after expiry of a period of time, and/or after passing a point in time, and/or after expiry of at least one of the approximately equal time intervals, none of the event conditions is fulfilled, the electronic service (40) submits the notification (80).

8. The method in accordance with one of the preceding claims,
**characterised in that**,
the submission of the notification (80) with the negative statement (81), or the positive statement (82) can be released at any time by the initiator (22), wherein
in particular the statement (81, 82) of the notification (80) generated by the electronic service can be changed by the initiator (22).

9. The method in accordance with one of the preceding claims,
**characterised in that**,
the announcement (30) is sent from a communications unit (15) of the initiator (22), wherein
in particular the message (50) and/or the notification (80) are submitted to a communications unit (15, 15') of each subscriber (21) in the group of subscribers (20).

10. The method in accordance with one of the preceding claims,
**characterised in that**,
from the initiator (22) a status query (31) is sent to the communications network (10), wherein
by virtue of the status query (31) a status response (22) is released and submitted to the initiator (22),
wherein
in particular the status response (32) has the number of statements (71, 72) and/or the information items (23) of the responding subscribers (21).

## Revendications

1. Procédé dans un réseau de communication (10) pour inviter un groupe de participants (20) à un évènement, dans lequel
le groupe de participants (20) se compose d'une pluralité de participants (21),
le réseau de communication (10) reçoit une communication (30) relative à évènement,
un service électronique (40) dans le réseau de communication (10) génère à partir de la communication (30) une nouvelle (50) et la nouvelle (50) est transmise aux participants (21) du groupe de participants (20),
dans le service électronique (20) au moins une condition d'évènement concernant l'évènement ayant lieu est déposée,
le réseau de communication (10) reçoit par les participants (21) au groupe de participants (20) au moins une réponse (70) et la réponse (70) contient une indication négative (71) ou une indication positive (72),
le service électronique (40) vérifie les indications (71, 72), si au moins une condition d'évènement est remplie,
dans le cas où au moins une condition d'évènement est remplie une notification (80) est envoyée à au moins un nombre de participants (21) du groupe de participants (20), et
les notifications (80) contiennent une indication négative (81) ou une indication positive (82) concernant l'évènement ayant lieu,
**caractérisé en ce que**
le service électronique (40) traite la communication (30), dans lequel la communication (30) consiste en une communication de déclenchement (34), qui initie une transmission d'une nouvelle standard (51) en tant que nouvelle (50), dans lequel la nouvelle standard (51) présente une invitation à évènement, qui est déjà prédéfinie dans la nouvelle standard (51),
et **en ce que** au moins une préférence est déposée dans le service électronique (40), dans lequel la préférence complète une communications incomplète (30) lors de la génération de la nouvelle (50).

2. Procédé selon la revendication 1, **caractérisé en ce que** un initiateur(22) envoie la communication (30) au réseau de communications (10), dans lequel notamment l'initiateur (22) est un participant (21) au groupe de participants (20).

3. Procédé selon la revendication 1 ou 2, **caractérisé en ce que** au moins une condition d'évènement est basée sur le nombre de réponses (70) et/ou le nombre de participants (21) et/ou le nombre d'indications (71,72).

4. Procédé selon une des revendications précédentes, **caractérisé en ce que** pour le, notamment pour chaque, participant (21) du groupe de participants (20) au moins une information (23) est déposée dans le service électronique (40).

5. Procédé selon la revendication 4, **caractérisé en ce que** au moins une condition d'évènement est basée sur les informations (23) des participants (21), dans lequel notamment la condition d'évènement est basé sur un nombre et/ou un type de l'information (23).

6. Procédé selon une des revendications précédentes, **caractérisé en ce que** le service électronique (40) à chaque obtention d'une réponse (70) et/ou après l'écoulement d'une période temporelle et/ou après l'écoulement d'un point temporel et/ou à intervalles approximativement simultanés vérifie si au moins une condition d'évènement est remplie.

7. Procédé selon la revendication 6, **caractérisé en ce que** au cas où après l'obtention de la réponse (70) et/ou après l'écoulement d'une période temporelle et/ou après l'écoulement d'un point temporel et/ou après l'écoulement d'au moins un des intervalles approximativement simultanés aucune des conditions d'évènement n'est remplie, le service électronique (40) transmet la notification (80).

8. Procédé selon une des revendications précédentes, **caractérisé en ce que** la transmission de la notification (80) eut être déclenchée à tout moment par l'initiateur (22) avec l'indication négative (81) ou l'indication positive (82), dans lequel notamment l'indication (81,82) de la notification (80) générée par le service électronique peut être modifiée par l'initiateur (22).

9. Procédé selon une des revendications précédentes, **caractérisé en ce que** la communications (30) est renvoyée par une unité de communication (15) de l'initiateur (22), dans lequel notamment la nouvelle (50) et/ou la notification (80) est transmise à une unité de communication (15, 15') de chaque participant (21) du groupe de participants (20).

10. Procédé selon une des revendications précédentes, **caractérisé en ce que** par l'initiateur (22) une interrogation de statut (31) est envoyée au réseau de communication (10), dans lequel une réponse de statut (32) est déclenchée par l'interrogation de statut (31) et est transmise à l'initiateur (22), dans lequel notamment la réponse de statut (32) présente le nombre d'indications (71,72) et/ou les informations (23) des participants répondant (21).
